# EUROPEAN PATENT SPECIFICATION

(11) **EP 1 190 289 B1**
(45) Date of publication and mention of the grant of the patent: **10.11.2004**
(21) Application number: 00927294.9
(22) Date of filing: 18.05.2000
(51) Int. Cl.: G06F 1/00, G06F 12/14

(54) **METHOD AND DEVICE FOR AUTHENTICATING A PROGRAM CODE**
VERFAHREN UND VORRICHTUNG UM EIN PROGRAMMCODE ZU BEGLAUBIGEN
PROCEDE ET DISPOSITIF POUR L'AUTHENTIFICATION D'UN CODE DE PROGRAMME

(30) Priority: 18.05.1999 FI 991134
(43) Date of publication of application: 27.03.2002
(73) Proprietor: SmartTrust Systems Oy, 00051 Sonera (FI)
(72) Inventor: HILTUNEN, Matti, FIN-02150 Espoo (FI); MIETTINEN, Jarmo, FIN-02600 Espoo (FI); NORDBERG, Marko, FIN-00180 Helsinki (FI); LIUKKONEN, Jukka, FIN-00530 Helsinki (FI)
(74) Representative: Simmelvuo, Markku
(86) International application number: PCT/FI2000/000448
(87) International publication number: WO 2000/070427

(56) References cited:
- WO-A2-98/10611
- US-A- 4 593 353
- US-A- 5 224 160
- STALLINGS WILLIAM: 'Data and computer communications', 1997, PRENTICE HALL INC., NEW JERSEY XP002968003 ISBN 0-13-571274 * page 640 - page 643 *

## Description

### SCOPE OF THE TECHNIQUE

The invention relates to communication systems. One specific objective of the invention is a method and system for testing the reliability of software.

The objective of the invention is a method for authenticating a program or program code stored on a storage device in which method a first check sum is computed at the program code, the check sum is compared with a second check sum known as valid and in response to the aforementioned comparison the program code is proved to be authentic in case the first check sum matches with the second check sum.

### BACKGROUND OF THE INVENTION

Mobile networks, i.e. GSM networks (GSM, Global System for Mobile communications) have recently become very popular. The additional services connected with the mobile networks have correspondingly increased at an accelerated tempo. The application fields are most versatile. The mobile telephone may be used as a means of payment for, e.g. petty purchases, such as soft drinks and car wash automates. Everyday activities, such as payment transactions, bank services etc, have been added, and will be added also in the future, to the functionality of present mobile phones. The mobile stations of the next generation will be more advanced in respect of the service level and data transfer capacity compared with the previous ones.

With the aid of digital signing, which is regarded as a general requirement in electronic payment, it is possible to make sure of the coherency of the information to be sent and identify the source address. The digital signature is derived by encrypting the check sum computed at the information to be sent. with a sender's private key. As nobody, except the sender, knows the private key, the recipient may, when decoding the encryption with the sender's public key, make sure that the information is unmodified and generated by using the private key only known to the sender. An example of an algorithm used in digital signing is a RSA ciphering algorithm, which is an encryption system of both the public key and the private key and which is also used for encrypting messages.

In the public key infrastructure the user keeps the private key only to himself/herself, but the public key is available to all entities. It is not enough that the public key is stored as such, e.g. in an electronic mail directory, because somebody might forge it and appear as an authentic holder of the key. Instead, certification and certificates are needed, which serve as a proof given by the trusted party (certification authority) of the fact that the name, identification number and public key belong to the same person. The certificate is usually a combination consisting of a public key, name and identification number etc, which the certification authority signs with his/her private key.

When the recipient of a digitally signed message wishes to make sure of the authenticity of the message, at first he/she has to obtain the digital certificate, which gives him/her the public key and the name. After that he/she has to authenticate the certificate. To be able to perform this he/she may have to obtain some more additional certificates (a cerfication chain), which have been used to authenticate the certificate in question.

In case the certificate is authentic, the recipient authenticates the message by using the public key received along with the certificate. If the signature passes the test, the sender is the person identified by the certificate. In certification, a special block list is used in which the certificates taken out of use are entered. Directory services are needed for both the certificates and the block list.

Mobile phones have been implemented by using at least partly embedded systems and software. In this case, the modifying of the original software and functions is possible, at least partly. With a modified software the content of electronic payment messages may be changed with intent to defraud by changing the account numbers, sums liable to payment, digital signatures etc, and at the same provide the user with the correct information about the transactions.

At the present time it is impossible for the user to check, if the mobile phone he is using is provided with the original software made by the manufacturer or some kind of modified version. In case the mobile phone is used for bank services, as a means of payment etc, the user has to be able to check that the device is provided with the valid, original software version.

The most important thing for the user is to be able to check the reliability of the display and key board, the security, the originality of the parts associated with the security, such as storage of the subscriber identification data, the pass words and key codes as well as the security and reliability of the communication channels used by the device. In addition, the user has to be able to check the software randomly, at an unpredictable moment so that the software is not beforehand prepared to be checked.

In principle, a software may be checked by using a so called direct checking in which case two independent check sums, effective enough, are computed on the mobile phone software, e.g. using a hash function SHA-1, MD5 or an equivalent and effective Hash function. The first check sum is computed on the mobile phone and the second check sum is computed by the supplier of the original software. The first and the second check sum are compared with each other and in case they match, the software of the telephone is original. However, the problem associated with this solution is the fact that a modified or forged software may ignore the programmatic computation coded in the program and print only the original check sum as if it were the first check sum, when so requested by the user.

WO-A2-9 810 611 and US-A-5 224 160 disclose the features defined in the preamble of the independent claims.

### THE OBJECTIVE OF THE INVENTION

The objective of the invention is to eliminate or at least reduce the drawbacks referred to above. One specific objective of the present invention is to disclose a method and system for reliable checking of the authenticity and validity of software in a mobile station, though the invention may be used for testing of any kinds of software.

A further objective of the invention is to disclose a reliable and variable method by using which different service providers and users of the services may make sure of the authenticity of the devices and programs used by them.

As for the features characteristic of the invention, reference to them is made in the claims.

### SUMMARY OF THE INVENTION

The main principle of the-method of the invention is as claimed in the claims.

In one application of the invention, an authenticated program code may be used for the authentication of other program codes included in the same software or system in such a way that the check sum of the authenticated program code is compared with the one given by other program codes over the same challenge. This concerns, e.g. the use of an authenticated program code of a first user for the authentication of the program code of a second user. In another application, the mobile phone of the first user might transmit a message to the mobile phone of the second user. The message would inform the challenge, which the user of the second mobile station could use for testing of his/her software. The same solution may be used for automatic testing in such a way that network transmits, e.g. during the initialisation of the call, a challenge to the telephone to which the telephone responds by transmitting the computed check sum. If the check sum is not valid, the network makes the necessary conclusions and informs the user as well as other necessary parties about the matter.

An advantage of the invention compared with the prior art is the fact that due to the invention embedded systems or software known as reliable may be implemented the reliability of which may be checked after certain periods of time.

A further advantage of the invention in comparison with the prior art is the fact that the computing of the check sum does not need to be an external function, instead it may be integrated in the software to be checked. Moreover, the solution of the invention makes it unnecessary to use the method of both the public key and the private key.

Moreover, random access memory is needed less, because the program code does not need to be decoded or modified in the device. Moreover, due to the dynamics of the challenge and the check sum corresponding to it, the check sum corresponding to the challenge may not be known beforehand. In this case, the generation of the challenges may be done completely randomly.

### DRAWINGS

In the following section, the invention is described by referring to the attached drawings in which

Fig. 1 schematically represents a device of the invention.

Fig. 2 represents the function as described in the invention by using a block diagram and

Fig. 3 represents one example of computing the check sum as described in the invention.

### DESCRIPTION OF THE INVENTION IN DETAIL

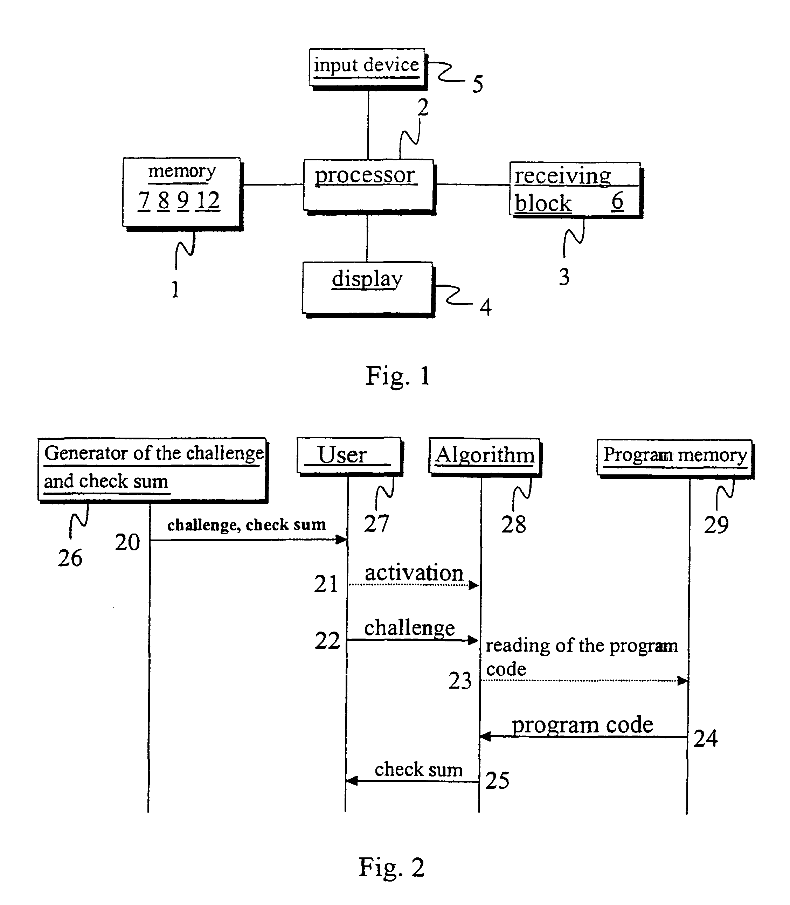

The device of fig. 1 comprises of memory 1, processor 2, receiving block 3, display 4 and input device 5. The memory is divided into a static part A and dynamic part B. The size of the dynamic part B is chosen in such a way that the check sum corresponding to the challenge does not fit to be stored in it, in order to reduce deceiving. Memory 1, receiving block 3, display 4 and input device 5 are connected to processor 2. One example of a device as represented in figure 1 could be a mobile station, which comprises of a central processing unit along with the processors 1 and memories 2, the receiving block 3, display 4 and the keyboard. Substantial in respect of the invention in question is not the device itself by using which the invention is realised, instead varied devices used in electronic transactions may be possible.

In addition, the device as represented in figure 1 comprises of means 12 for computing the check sum at the program code, means 6 for adding the predetermined challenge to the program code and means 7 for computing the aforementioned first check sum at the combination of the program code and the challenge. In one application, the means 7 and 12 may be implemented, e.g. using a certified program code in which case they are saved in the memory.

Moreover, the device as represented in figure 1 comprises of means 8 for storing the program and challenge in the memory space and means 9 for computing the check sum at the whole static memory space, wherein the aforementioned program code and challenge are stored. Moreover, the device comprises of equipment 10 for receiving the challenge on the storage device via keyboard 5.

Fig. 2 represents the function of the invention in block diagram. The generator 26 of both the challenge and the check sum is an outside certification authority, another than the user 27, e.g. the manufacturer of the program or a trusted third part, which posses the original program code. The user receives the challenge and the corresponding check sum, arrow 20, from an outside certification authority, e.g. from its safe Internet sites. The user 27 activates the check prompt of the device, arrow 21. The device requests of the user for the challenge, which he/she inputs into the device, arrow 22. The device is, e.g. a mobile phone. The program code is read according to-the algorithm 28, arrows 23 and 24, and the check sum is computed using an appropriate method. The program code is located in the program memory 29. The check sum may be computed, e.g. using a hash function. Hash functions are, e.g. MD5 and SHA-1. The check sum resulted from the application of algorithm 28 is returned to the user 27, who requested it, arrow 25. The user 27 reads the computed check sum, e.g. on the display of his/her mobile phone and compares it with the check sum given by the outside certification authority. If the check sums match, the program code of the device is valid.

Substantial in the way of realising the checkout is the fact that the challenge is not known beforehand. For this reason, the check sum corresponding to the challenge is impossible to anticipate. The challenge to be input has to be, in addition to that, long enough, in order to gain the wished reliability. Further, the check sum itself is not input into the program in which case the program cannot adapt itself to the circumstances, in accordance with the check sum. When generating the check sum, the whole program code to be checked is read using an algorithm. The challenge and the program code are combined in such a way that the program cannot compute the combination of the result of the checkout and the challenge corresponding to the original program code and consequently come to the right conclusion.

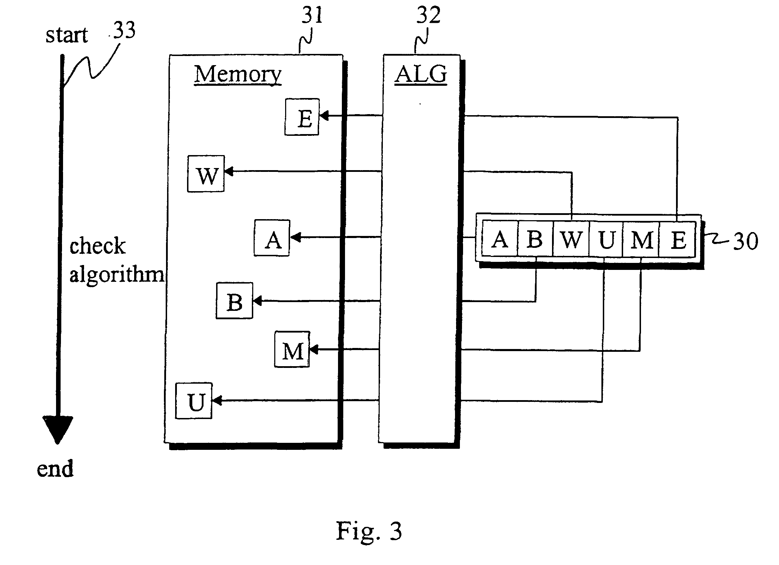

Fig. 3 represents a preferred example of generating the check sum as described in the invention. The user wishes to make sure of the originality of the software he/she is using as described in the invention. For the checkout, a random challenge 30 has been generated using which the checkout is carried out. In this example the challenge 30 is a character string consisting of characters A, B, W, U, M and E. Each of the characters of the challenge 30 are located somewhere in the memory space 31. The location area is defined by the location algorithm 32. The location algorithm functions, e.g. in such a way that the character included in the challenge is added to a certain memory address of the memory area 31 or alternatively in such a way that a certain computation operation is carried out between the character and the content of a certain memory address the outcome of which is located in the memory address in question. Arrow 33 shows the proceeding of the check algorithm. When all the characters included in the challenge have been located in the memory space 31 as wished, a check sum is computed at the whole memory area using, e.g. a hash algorithm. As an example of a hash algorithm let it be mentioned the MD5 and SHA-1 algorithms.

## Claims

1. A method for authenticating a program code stored on a storage device, which method comprises the steps of:
- a first hash function is computed on the program code,
- the hash value is compared with a second hash value known as valid, and
- in response to the aforementioned comparison the program code is proved to be valid, in case the first hash value matches with the second hash value,
**characterised in that** the method comprises the steps of:
- for checking of the authenticity of the software stored at the device, a challenge is stored or inputted into the device at a random moment,
- the challenge is added to the program code, which challenge is chosen from a group including a character string, a program function and an input, in order to form the combination of the program code and challenge, and
- the aforementioned first hash function is computed on the aforementioned combination.

2. The method as described in claim 1, **characterised in that** a new challenge or a set of new challenges and corresponding hash value are announced by the manufacturer of the original software.

3. The method as described in claim 2, **characterised in that** a new challenge or a set of new challenges is/are announced periodically.

4. The method as described in claim 1, **characterised in that** the challenge and/or the hash value are retrieved from a database or in any type of media that can be accessed in order to get the challenge and/or the hash value.

5. The method as described in claim 1, **characterised in that** the challenge and the hash value corresponding to it are chosen from a random group consisting of a set of challenges and hash values corresponding to them.

6. The method as described in claim 1, **characterised in that** the challenge is transmitted from an outside terminal, an outside certification authority or a communication network at the initialisation phase.

7. The method as described in claim 1, **characterised in that** a certain part of the program code is substituted with the challenge before computing the hash function.

8. The method as described in claim 1, 2, 3, 4, 5, 6 or 7, **characterised in that** the method comprises the steps of:
- the said program code and the said challenge are stored in the memory space, and
- the first hash function is computed on the whole memory space, wherein the aforementioned program code and challenge are stored.

9. The method as defined in claim 1, 2, 3, 4, 5, 6, 7 or 8, **characterised in that** the length of the said challenge is chosen in such a way that the freed memory cannot be used for storing the hash values corresponding to the challenges.

10. The method as defined in claim 1, **characterised in that** an authenticated program code is used for authenticating other program codes included in the same software or system in such a way that the hash value of an authenticated program code is compared with the one given by other program codes over the same challenge.

11. The method as defined in claim 1, **characterised in that** the method, in addition,
prevents the connection of the said storage device with the outside world, and
the validity of the program code is verified in the storage device.

12. The method as defined in claim 1, **characterised in that** the said challenge to be added to the said program code is modified by using a certain algorithm, in order to get a challenge of a standard format.

13. A device for authenticating the program code, which device comprises of the following equipment:
- data-processing equipment (1),
- storage device (2), which is connected with the aforementioned data-processing equipment (1),
- means (12) for computing the hash function on the program code,
- display (4), which is connected to the aforementioned data-processing equipment, and
- keyboard (5), which is connected to the aforementioned data-processing equipment,
**characterised in that** the equipment comprises of:
- means (6) for adding the predetermined challenge, which is chosen from a group, which consists of a character string, a program function and an input, to the program code, as well as means for forming the combination of the program code and the challenge, and
- means (7) for computing the first hash function on the aforementioned combination.

14. The device as defined in claim 13, **characterised in that** the device comprises of:
- means (8) for storing the said program code and said challenge in the static memory space, and
- means (9) for computing the hash function on the whole static memory space, wherein the said program code and said challenge are stored.

15. The device as defined in claim 13 or 14, **characterised in that** the device comprises of means (3) for receiving the said challenge at the storage device via keyboard (5).

16. The device as defined in claim 13, 14 or 15, **characterised in that** the device comprises of means (10) for retrieving the challenge and/or the hash value from a database or in any type of media that can be accessed in order to get the challenge and/or the hash value.

17. The device as defined in claim 13, 14, 15 or 16, **characterised in that** the device comprises of means (11) for receiving the challenge from an outside terminal, an outside certification authority or a communication network at the initialisation phase.

18. The device as defined in claim 13, 14, 15, 16 or 17, **characterised in that** the device comprises means (13) for substituting a certain part of the program code with the challenge before computing the hash function.

## Patentansprüche

1. Verfahren zum Authentifizieren eines Programmcodes, welcher in einer Speichervorrichtung gespeichert ist, wobei das Verfahren die Schritte aufweist:
- Berechnen einer ersten Hashfunktion aus dem Programmcode;
- Vergleichen eines Hashwertes mit einem zweiten Hashwert, welcher als gültig bekannt ist; und
- der Programmcode wird als gültig anerkannt als Reaktion auf den zuvor genannten Vergleich, falls der erste Hashwert mit dem zweiten Hashwert übereinstimmt;
**dadurch gekennzeichnet,**
**dass** das Verfahren die Schritte aufweist:
- Speichern und Eingeben einer Anforderung in die Speichervorrichtung zu einem zufälligen Zeitpunkt zum Prüfen der Authentifizierung der Software, welche in der Speichervorrichtung gespeichert ist;
- Addieren der Anforderung zu dem Programmcode, wobei die Anforderung aus einer Gruppe gewählt wird, welche eine Zeichenfolge, eine Programmfunktion und eine Eingabe zum Bilden einer Kombination mit dem Programmcode und der Anforderung beinhaltet; und
- Berechnen der zuvor genannten ersten Hashfunktion aus der zuvor genannten Kombination.

2. Verfahren nach Anspruch 1,
**dadurch gekennzeichnet,**
**dass** eine neue Anforderung oder ein Satz neuer Anforderungen und zugehöriger Hashwert(e) durch den Hersteller der Originalsoftware bekannt gegeben werden.

3. Verfahren nach Anspruch 2,
**dadurch gekennzeichnet,**
**dass** eine neue Anforderung oder ein Satz neuer Anforderungen regelmäßig bekannt gegeben werden.

4. Verfahren nach Anspruch 1,
**dadurch gekennzeichnet, dass** die Anforderung und/oder der Hashwert aus einer Datenbank oder von einem Medientyp abgefragt werden, welche zum Erhalten der Anforderungen und/oder des Hashwertes zugänglich sind.

5. Verfahren nach Anspruch 1,
**dadurch gekennzeichnet, dass** die Anforderung und der zu der Anforderung zugehörige Hashwert aus einer zufälligen Gruppe ausgewählt werden, welche aus einem Satz an Anforderungen und zu den Anforderungen zugehörigen Hashwerten besteht.

6. Verfahren nach Anspruch 1,
**dadurch gekennzeichnet, dass** die Anforderung einem externen Endgerät, einer externen Zertifizierungsbehörde oder einem Kommunikationsnetzwerk in einer Initialisierungsphase übermittelt wird.

7. Verfahren nach Anspruch 1,
**dadurch gekennzeichnet, dass** ein bestimmter Teil des Programmcodes durch die Anforderung ersetzt wird, bevor die Hashfunktion berechnet wird.

8. Verfahren nach einem der Ansprüche 1 bis 7,
**dadurch gekennzeichnet, dass** das Verfahren die Schritte aufweist:
- Speichern des Programmcodes und der Anforderung in einem Speicherplatz; und
- Berechnen der ersten Hashfunktion auf dem gesamten Speicherplatz, in welchem der zuvor genannte Programmcode und die Anforderung gespeichert sind.

9. Verfahren nach einem der Ansprüche 1 bis 8,
**dadurch gekennzeichnet, dass** die Länge der Anforderung derart gewählt wird, dass freigegebener Speicher nicht zum Speichern der den Anforderungen zugehörigen Hashwerte benutzt werden kann.

10. Verfahren nach Anspruch 1,
**dadurch gekennzeichnet, dass** ein authentifizierter Programmcode zum Authentifizieren eines anderen Programmcodes, welcher in derselben Software oder System enthalten ist, verwendet wird, so dass der Hashwert des authentifizierten Programmcodes mit dem Hashwert verglichen wird, welcher durch andere Programmcodes über dieselbe Anforderung gegeben ist.

11. Verfahren nach Anspruch 1,
**dadurch gekennzeichnet, dass** das Verfahren zusätzlich eine Verbindung der Speichervorrichtung mit der Außenwelt verhindert; und
die Gültigkeit des Programmcodes in der Speichereinrichtung verifiziert wird.

12. Verfahren nach Anspruch 1,
**dadurch gekennzeichnet, dass** die Anforderung, welche zu dem Programmcode addiert wird, durch Verwenden bestimmter Algorithmen verändert wird, um eine Anforderung eines Standardformats zu erhalten.

13. Vorrichtung zum Authentifizieren des Programmcodes, wobei die Vorrichtung folgende Einrichtungen aufweist:
- eine Datenverarbeitungseinrichtung (1);
- eine Speichervorrichtung (2), welche mit der zuvor genannten Datenverarbeitungseinrichtung (1) verbunden ist;
- eine Einrichtung (12) zum Berechnen einer Hashfunktion auf dem Programmcode;
- eine Anzeigeeinrichtung (4), welche mit der zuvor genannten Datenverarbeitungseinrichtung verbunden ist; und
- eine Tastatur (5), welche mit der zuvor genannten Datenverarbeitungseinrichtung (1) verbunden ist;
**dadurch gekennzeichnet, dass** die Einrichtung aufweist:
- Mittel (6) zum Addieren einer vorbestimmten Anforderung zu dem Programmcode, welche aus einer Gruppe bestehend aus einer Zeichenfolge, einer Programmfunktion und einer Eingabe gewählt wird, wie auch Mittel zum Bilden einer Kombination des Programmcodes und der Anforderung; und
- Mittel (7) zum Berechnen der ersten Hashfunktion der zuvor genannten Kombination.

14. Vorrichtung nach Anspruch 13,
**dadurch gekennzeichnet, dass** die Vorrichtung aufweist:
- Mittel (8) zum Speichern des Programmcodes und der Anforderung in einem statischen Speicherplatz; und
- Mittel (9) zum Berechnen der Hashfunktion auf dem gesamtem statischen Speicherplatz, in welchem der Programmcode und die Anforderung gespeichert sind.

15. Vorrichtung nach einem der Ansprüche 13 oder 14,
**dadurch gekennzeichnet, dass** die vorrichtung Mittel (3) zum Empfangen der Anforderung in der Speichervorrichtung mittels einer Tastatur (5) aufweist.

16. Vorrichtung nach einem der Ansprüche 13 bis 15,
**dadurch gekennzeichnet, dass** die Vorrichtung Mittel (10) zum Abfragen der Anforderung und/oder eines Hashwertes von einer Datenbank oder einem Medientyp aufweist, auf welchen zugegriffen werden kann, um die Anforderung und/oder den Hashwert zu erhalten.

17. Vorrichtung nach einem der Ansprüche 13 bis 16,
**dadurch gekennzeichnet, dass** die Vorrichtung Mittel (11) zum Empfangen der Anforderung von einem externen Endgerät, einer externen Zertifizierungsbehörde oder einem Kommunikationsnetzwerk in einer Initialisierungsphase aufweist.

18. Vorrichtung nach einem der Ansprüche 13 bis 17,
**dadurch gekennzeichnet, dass** die Vorrichtung Mittel (13) zum Ersetzen eines bestimmten Teils des Programmcodes vor dem Berechnen der Hashfunktion aufweist.

## Revendications

1. Procédé pour l'authentification d'un code de programme stocké sur un dispositif de stockage, ledit procédé comprenant les étapes consistant à :
- calculer une première fonction de contrôle sur le code de programme,
- comparer la valeur de contrôle avec une deuxième valeur de contrôle reconnue comme valide, et
- en réponse à la comparaison susmentionnée, reconnaître la validité du code de programme si la première valeur de contrôle correspond à la deuxième valeur de contrôle,
**caractérisé en ce que** le procédé comprend les étapes consistant à :
- pour vérifier l'authenticité du logiciel stocké sur le dispositif, stocker ou entrer un défi dans le dispositif à un moment aléatoire,
- ajouter le défi au code de programme, le défi étant choisi dans un groupe comprenant une chaîne de caractères, une fonction de programme et une entrée, afin de former la combinaison du code de programme et du défi, et
- calculer la première fonction de contrôle susmentionnée sur la combinaison susmentionnée.

2. Procédé selon la revendication 1, **caractérisé en ce qu'**un nouveau défi ou un jeu de nouveaux défis et des valeurs de contrôle correspondantes sont annoncés par le fabricant du logiciel d'origine.

3. Procédé selon la revendication 2, **caractérisé en ce qu'**un nouveau défi ou un jeu de nouveaux défis est/sont annoncés périodiquement.

4. Procédé selon la revendication 1, **caractérisé en ce que** le défi et/ou la valeur de contrôle sont extraits d'une base de données ou de tout type de support accessible pour obtenir le défi et/ou la valeur de contrôle.

5. Procédé selon la revendication 1, **caractérisé en ce que** le défi et la valeur de contrôle lui correspondant sont choisis dans un groupe aléatoire constitué d'un jeu de défis et de valeurs de contrôle leur correspondant.

6. Procédé selon la revendication 1, **caractérisé en ce que** le défi est transmis depuis un terminal externe, une autorité de certification externe ou un réseau de communication lors de la phase d'initialisation.

7. Procédé selon la revendication 1, **caractérisé en ce qu'**une certaine partie du code de programme est remplacée par le défi avant le calcul de la fonction de contrôle.

8. Procédé selon les revendications 1, 2, 3, 4, 5, 6 ou 7, **caractérisé en ce que** le procédé comprend les étapes consistant à :
- stocker ledit code de programme et ledit défi dans l'espace mémoire, et
- calculer la première fonction de contrôle sur l'ensemble de l'espace mémoire, dans lequel le code de programme et le défi susmentionnés sont stockés.

9. Procédé selon les revendications 1, 2, 3, 4, 5, 6, 7 ou 8, **caractérisé en ce que** la longueur dudit défi est choisie de telle manière que la mémoire libérée ne peut pas être utilisée pour stocker les valeurs de contrôle correspondant aux défis.

10. Procédé selon la revendication 1, **caractérisé en ce qu'**un code de programme authentifié est utilisé pour authentifier d'autres codes de programme compris dans le même logiciel ou système de telle manière que la valeur de contrôle d'un code de programme authentifié est comparée avec celle donnée par d'autres codes de programme avec le même défi.

11. Procédé selon la revendication 1, **caractérisé en ce que** le procédé empêche, en outre, la connexion dudit dispositif de stockage avec l'extérieur, et
la validité du code de programme est vérifiée dans le dispositif de stockage.

12. Procédé selon la revendication 1, **caractérisé en ce que** ledit défi à ajouter audit code de programme est modifié au moyen d'un certain algorithme, afin d'obtenir un défi de format standard.

13. Dispositif pour l'authentification du code de programme, ledit dispositif comprenant les équipements suivants :
- équipement de traitement de données (1),
- dispositif de stockage (2), connecté au matériel de traitement de données susmentionné (1),
- moyens (12) pour calculer la fonction de contrôle sur le code de programme,
- affichage (4), connecté au matériel de traitement de données susmentionné, et
- clavier (5), connecté au matériel de traitement de données susmentionné,
**caractérisé en ce que** le matériel comprend :
- moyens (6) pour ajouter au code de programme le défi prédéterminé qui est choisi dans un groupe constitué d'une chaîne de caractères, d'une fonction de programme et une entrée, ainsi que des moyens pour former la combinaison du code de programme et du défi, et
- moyens (7) pour calculer la première fonction de contrôle sur la combinaison susmentionnée.

14. Dispositif selon la revendication 13, **caractérisé en ce que** le dispositif comprend :
- des moyens (8) pour stocker ledit code de programme et ledit défi dans l'espace mémoire statique, et
- des moyens (9) pour calculer la fonction de contrôle sur l'ensemble de l'espace mémoire statique, dans lequel ledit code de programme et ledit défi sont stockés.

15. Dispositif selon les revendications 13 ou 14, **caractérisé en ce que** le dispositif comprend des moyens (3) pour recevoir ledit défi sur le dispositif de stockage au moyen du clavier (5).

16. Dispositif selon les revendications 13, 14 ou 15, **caractérisé en ce que** le dispositif comprend des moyens (10) pour extraire le défi et/ou la valeur de contrôle d'une base de données ou de tout type de support accessible pour obtenir le défi et/ou la valeur de contrôle.

17. Dispositif selon les revendications 13, 14, 15 ou 16, **caractérisé en ce que** le dispositif comprend des moyens (11) pour recevoir le défi d'un terminal externe, une autorité de certification externe ou un réseau de communication lors de la phase d'initialisation.

18. Dispositif selon les revendications 13, 14, 15, 16 ou 17, **caractérisé en ce que** le dispositif comprend des moyens (13) pour substituer une certaine partie du code de programme par le défi avant le calcul de la fonction de contrôle.
